# EUROPÄISCHE PATENTSCHRIFT

(11) **EP 1 200 746 B1**
(45) Veröffentlichungstag und Bekanntmachung des Hinweises auf die Patenterteilung: **24.09.2003**
(21) Anmeldenummer: 00935218.8
(22) Anmeldetag: 17.06.2000
(51) Int. Cl.: F16B 13/06

(54) **BEFESTIGUNGSELEMENT AUS METALL**
METAL FASTENING ELEMENT
ELEMENT DE FIXATION METALLIQUE

(30) Priorität: 30.07.1999 DE 19936090
(43) Veröffentlichungstag der Anmeldung: 02.05.2002
(73) Patentinhaber: fischerwerke Artur Fischer GmbH & Co. KG, 72178 Waldachtal (DE)
(72) Erfinder: FRISCHMANN, Albert, D-79341 Kenzingen (DE); SCHÄFFER, Marc, D-72160 Horb-Bildechingen (DE)
(86) Internationale Anmeldenummer: EP0005601
(87) Internationale Veröffentlichungsnummer: WO01009525

(56) Entgegenhaltungen:
- DE-A- 3 714 025

## Beschreibung

Die Erfindung betrifft ein Befestigungselement aus Metall zur Verankerung in einem Bohrloch eines Bauteils gemäß dem Oberbegriff des Anspruches 1.

Aus der DE 37 14 025 C2 ist ein gattungsgemäßes Befestigungselement mit einer Spreizhülse und einem auf dem Schaft eines Gewindebolzens axial verschiebbaren Spreizkörper bekannt. Der Gewindebolzen weist an seinem vorderen Ende einen als Bund ausgebildeten Anschlag und eine zwischen dem Anschlag und dem axial verschiebbaren Spreizkörper angeordnete Schraubenfeder auf. Beim Aufdrehen einer sich am zum befestigenden Gegenstand abstützenden Mutter auf den Gewindebolzen wird dieser in Richtung Bohrlochmündung bewegt und dabei mit der zwischen dem Anschlag und dem verschiebbaren Spreizkörper angeordneten Schraubenfeder der Spreizkörper in die Spreizhülse zu deren Verankerung im Bohrloch des Bauteils eingedrückt. Gleichzeitig wird die Schraubenfeder leicht vorgespannt, so dass bei einer Bohrlocherweiterung durch Rissbildung der Spreizkörper zum Ausgleich der Bohrlocherweiterung nach-. gedrückt wird. Ferner ist das bekannte Befestigungselement auch in der Lage, Stoßbelastungen, die beispielsweise infolge eines Erdbebens auftreten, zu absorbieren und damit ein Ausbruch des Befestigungselementes oder ein Abreißen des Gewindebolzens zu verhindern.

Nachteilig bei der bekannten Lösung ist jedoch, dass durch das Nachdrücken des Spreizkörpers in die Spreizhülse der axiale Abstand zwischen dem Spreizkörper und dem Anschlag unter Umständen so weit vergrößert wird, dass die Schraubenfeder danach nicht mehr verspannt ist und unter Umständen sogar ein axiales Spiel aufweist. Durch die nunmehr fehlende Abstützung und Verspannung des Spreizkörpers ist ein Nachdrücken des Spreizkörpers bei einer weiteren Bohrlocherweiterung durch Vergrößerung des Risses beispielsweise infolge von Nachbeben nicht mehr möglich.

Der Erfindung liegt daher die Aufgabe zugrunde, ein Befestigungselement zu schaffen, welches in der Lage ist, eine Folge von Stoßbelastungen ohne Versagen der Verankerung zu absorbieren.

Die Lösung dieser Aufgabe wird durch die im Anspruch 1 angegebenen Merkmale erreicht.

Durch die Verwendung eines hülsenförmigen Distanzelements anstelle einer Schraubenfeder und einem als Aufweitkörper ausgebildeten Anschlag wird bei einer auf den Gewindebolzen wirkenden Überlastung der Aufweitkörper in die Distanzhülse eingezogen. Durch die dabei entstehende hohe Reibung beim Aufweiten und Deformieren des Distanzelementes wird das Distanzelement gegen den auf dem Gewindebolzen axial verschiebbaren Spreizkörper gedrückt, der dadurch in die Spreizhülse nachgeschoben wird. Da von dem Distanzelement keine Rückstellkraft ausgeht, bleibt der durch die Überlastung entstandene verkürzte Abstand zwischen dem Aufweitkörper und dem Spreizkörper und damit die Verspannung des Spreizkörpers in der Spreizhülse auch nach Entlastung bestehen. Bei weiter auftretenden Stoßbelastungen verschiebt sich lediglich der Aufweitkörper innerhalb des Distanzelements weiter in Richtung des Spreizkörpers, wobei der Anpressdruck auf den Spreizkörper durch die Reibung innerhalb des Distanzelements bestehen bleibt. Die Länge des Distanzelements bestimmt somit die Länge der Deformationszone, wobei die Durchzugskraft durch verschiedene Parameter einstellbar ist. So ist es beispielsweise möglich, das Distanzelement als geschlossene Hülse aus einem weichen Metall oder Kunststoff auszubilden:

Eine bevorzugte Ausführungsform des Distanzelements ist eine einen Längsschlitz aufweisende Federhülse, deren Aufweitung durch den Aufweitkörper im elastischen Bereich erfolgt. Zweckmäßig ist es, den Aufweitkörper durch einen Konus mit einem sich daran anschließenden zylindrischen Bund auszubilden.

Das erfindungsgemäße Befestigungselement kann sowohl als Hinterschnittanker ausgebildet sein, bei dem die Verankerung der Spreizhülse in einer Hinterschneidung des Bohrloches erfolgt, oder als Durchsteckanker, bei dem sich der Schaft des Gewindebolzens im Anschluss an den die Spreizhülse aufnehmenden Abschnitt auf den Durchmesser der Spreizhülse erweitert.

In der Zeichnung sind Ausführungsbeispiele der Erfindung dargestellt. Es zeigen:
- Figur 1: das erfindungsgemäße Befestigungselement in einer Ausführungsform als Hinterschnittanker;
- Figur 2: das Befestigungselement in einer Ausführungsform als Durchsteckanker.

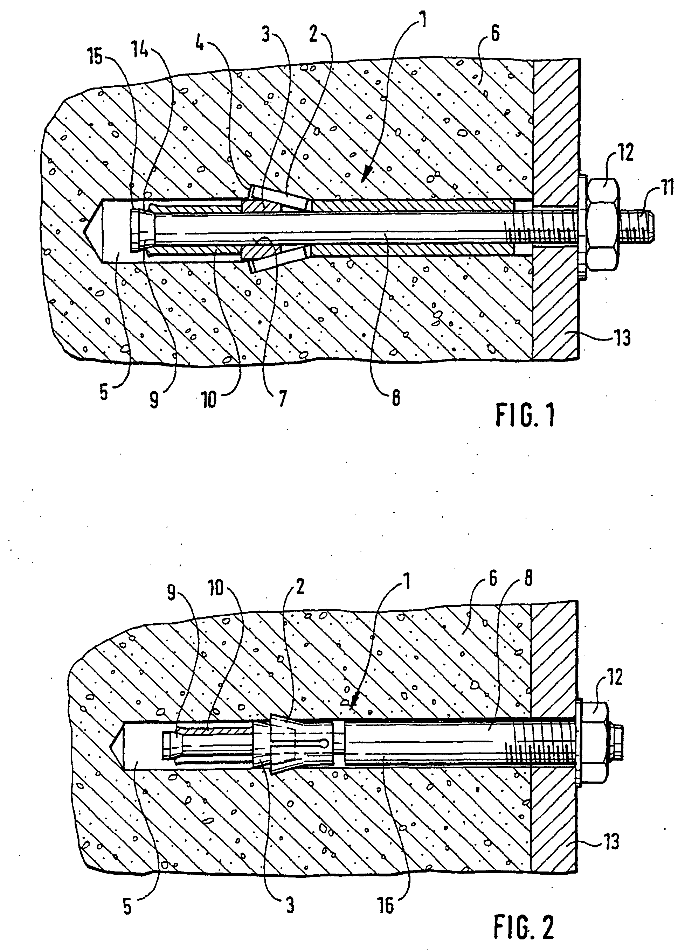

Das in Figur 1 dargestellte Befestigungselement 1 weist eine Spreizhülse 2 auf, die durch den Spreizkörper 3 in einem eine Hinterschneidung 4 aufweisenden Bohrloch 5 eines Bauteils 6 verankert ist. Der eine Durchgangsbohrung 7 aufweisende Spreizkörper 3 ist auf dem Schaft des Gewindebolzens 8 axial verschiebbar.

Zwischen dem Spreizkörper 3 und dem am vorderen Ende des Gewindebolzens 8 angeordneten Aufweitkörper 9 ist ein hülsenförmiges Distanzelement angeordnet, das beispielsweise aus einem weichen Metall oder aus einem Kunststoff als geschlossene Hülse bestehen kann. in diesem Fall erfolgt eine plastische Verformung der Hülse beim Durchzug des Aufweitkörpers 9 durch das Distanzelement 10. Ist das Distanzelement 10 als Federhülse mit einem Längsschlitz ausgebildet, entsteht beim Durchzug eine elastische Verformung, wobei die Reibkraft durch die Wandungsdicke der Federhülse bestimmt wird. Der das Distanzelement 10, den Spreizkörper 3 und die Spreizhülse 2 durchdringende Gewindebolzen weist an seinem hinteren Ende ein Gewinde 11 auf, auf das eine Mutter 12 zur Befestigung eines Gegenstandes 13 aufgeschraubt wird. Beim Aufschrauben der Mutter 12 wird der Gewindebolzen 8 axial in Richtung Bohrlochmündung bewegt, so dass über den in das Distanzelement 10 eindringenden Aufweitkörper 9 eine Schubkraft auf den Spreizkörper 3 entsteht. Diese Schubkraft drückt den Spreizkörper 3 in den geschlitzten Teil der Spreizhülse 2 hinein und spreizt diese in der Hinterschneidung 4 auf. Dadurch entsteht eine formschlüssige Verbindung zwischen dem Befestigungselement 1 und dem Bauteil 6.

Treten nun Stoßbelastungen am Gewindebolzen 8 auf, wird der Aufweitkörper 9 stoßartig weiter in das hülsenförmige Distanzelement 10 bei Erzeugung einer gedämpften, auf den Spreizkörper 3 wirkenden Schubkraft eingezogen. Durch die Reibung und Deformation des Distanzelements wird eine Überbeanspruchung sowohl des Gewindebolzens als auch des Betons vermieden. Über die Länge des Distanzelements 10 sowie Material und Geometrie des Aufweitkörpers und des Distanzelements kann die Deformationszone auf die jeweiligen Einbauverhältnisse abgestimmt werden. Im dargestellten Ausführungsbeispiel ist der Aufweitkörper 9 durch einen Konus 14 mit einem sich daran anschließenden zylindrischen Bund 15 gebildet.

Bei dem in Figur 2 dargestellten Ausführungsbeispiel ist der Schaft 16 des Gewindebolzens 8 im Anschluss an den die Spreizhülse 2 aufnehmenden Abschnitt auf den Durchmesser der Spreizhülse 2 erweitert. Damit ist dieses Befestigungselement 1a in Durchsteckmontage verwendbar, bei der das Befestigungselement durch den zu befestigenden Gegenstand 13 in das Bohrloch 5 eingeführt werden kann. Das Distanz- . element 10 ist in diesem Ausführungsbeispiel als Federhülse ausgebildet und die Verankerung erfolgt in einem zylindrischen Bohrloch 5.

## Patentansprüche

1. Befestigungselement aus Metall mit einer Spreizhülse (2) und einem auf dem Schaft eines Gewindebolzens (8) axial verschiebbaren Spreizkörper (3) zur Verankerung in einem Bohrloch eines Bauteils, wobei der Gewindebolzen (8) an seinem vorderen Ende einen Anschlag aufweist, zwischen dem und dem Spreizkörper (3) ein Distanzelement angeordnet ist, das sich an dem Spreizkörper (3) abstützt, **dadurch gekennzeichnet, dass** der Anschlag als Aufweitkörper (9) ausgebildet ist, der bei Zugbelastung in das hülsenförmige Distanzelement (10) eindringt und eine der Länge des Distanzelementes (10) entsprechende Deformationszone bildet.

2. Befestigungselement nach Anspruch 1, **dadurch gekennzeichnet, dass** das Distanzelement (10) eine einen Längsschlitz aufweisende Federhülse ist.

3. Befestigungselement nach Anspruch 1, **dadurch gekennzeichnet, dass** der Aufweitkörper (9) durch einen Konus (14) mit einem sich daran anschließenden zylindrischen Bund (15) gebildet ist.

4. Befestigungselement nach Anspruch 1, **dadurch gekennzeichnet, dass** sich der Schaft (16) des Gewindebolzens (8) im Anschluss an den die Spreizhülse aufnehmenden Abschnitt auf den Durchmesser der Spreizhülse (2) erweitert.

## Claims

1. Fastening element made from metal, having an expansion sleeve (2) and an expansion member (3), which expansion member (3) is axially displaceable on the shank of a threaded bolt (8), for anchoring in a hole drilled in a building component, the threaded bolt (8) having on its forward end an end-stop, between which end-stop and the expansion member (3) there is arranged a spacing element, which bears against the expansion member (3), **characterised in that** the end-stop is in the form of an expander (9), which in the event of a tensile load enters the sleeve-shaped spacing element (10) and forms a deformation zone that corresponds to the length of the spacing element (10).

2. Fastening element according to claim 1, **characterised in that** the spacing element (10) is a spring sleeve having a longitudinal slit.

3. Fastening element according to claim 1, **characterised in that** the expander (9) is formed by a cone (14) having a cylindrical collar (15) adjacent thereto.

4. Fastening element according to claim 1, **characterised in that** the shank (16) of the threaded bolt (8), next to the region accommodating the expansion sleeve, widens out to the diameter of the expansion sleeve (2).

## Revendications

1. Elément de fixation métallique avec un manchon ou une douille expansible (2) et un corps d'expansion (3) mobile axialement sur la tige d'un boulon fileté (8) pour l'ancrage dans le perçage d'un élément de construction, le boulon fileté (8) comportant, à son extrémité avant, une butée, et un élément d'écartement qui s'appuie sur le corps d'expansion (3) étant disposé entre cette butée et le corps d'expansion (3), **caractérisé en ce que** la butée est conçue comme un corps d'élargissement (9) qui pénètre, lors d'un effort de traction, dans l'élément d'écartement (10) en forme de manchon ou de douille et qui constitue un zone de déformation correspondant à la longueur de l'élément d'écartement (10).

2. Élément de fixation selon la revendication 1, **caractérisé en ce que** l'élément d'écartement (10) est un manchon élastique comportant une fente longitudinale.

3. Élément de fixation selon la revendication 1, **caractérisé en ce que** le corps d'élargissement (9) est constitué d'un cône (14) prolongé d'un collet cylindrique (15).

4. Élément de fixation selon la revendication 1, **caractérisé en ce que** la tige (16) du boulon fileté (8) s'élargit, dans le prolongement de la partie dans laquelle se trouve le manchon expansible, jusqu'au diamètre du manchon expansible (2).
